# EUROPEAN PATENT APPLICATION

(11) **EP 3 640 030 A1**
(43) Date of publication of application: **22.04.2020**
(21) Application number: 18201082.7
(22) Date of filing: 17.10.2018
(51) Int. Cl.: B33Y 30/00, B29C 64/20, B33Y 40/00

(54) **FILLER MATERIAL DEVICE FOR THREE-DIMENSIONAL PRINTING**

(71) Applicant: Siemens Aktiengesellschaft, 80333 München (DE)
(72) Inventor: Ceriani, Nicola Maria, 91052 Erlangen (DE)

(57) **Abstract**

What is proposed is a three-dimensional printer (2), comprising a raw material deposition device (17), and a build chamber (4), wherein the raw material deposition device (17) is designed to deposit raw material within the build chamber (4) to print at least one structural element (1). The three-dimensional printer is characterized in that it comprises a filler material deposition device (8) according to one of the claims 1 through 5, which is designed to deposit a filler material (7) within the build chamber (4) on parts of the build chamber (4), where no raw material has been deposited, wherein the raw material and the filler material (7) are designed differently.

## Description

The present disclosure is directed to a filler material deposition device for depositing filler material in a build chamber of a three-dimensional printer according to claim 1. Furthermore, the present disclosure is directed to a raw material deposition device for depositing raw material in a build chamber of a three-dimensional printer according to claim 6. Still further, the present disclosure is directed to a three-dimensional printer, comprising a raw material powder deposition device and a build chamber according to claim 9 and to a method of printing a structural element by means of a three-dimensional printer according to claim 12.

In powder bed fusion three-dimensional printers, the build process typically works as follows. The machine has a build chamber inside of which a build plate is located, which is the surface on top of which the parts are three-dimensionally printed. At each build step the build plate moves downwards of a defined distance, freeing up a volume inside the build chamber. Such volume is filled with fresh raw material, that is metal or polymer powder, using a moving tool called "recoater". The printing process is done layer by layer. A new layer of the part is 3D printed by fusing the raw material powder, either with a laser or electron beam ray or with a binding agent.

Since the shape and size of the build chamber is fixed from machine construction and the shape and size of the parts to be three-dimensionally printed vary, the volume of the build chamber is usually not completely filled by the volume of the printed parts. The remaining free volume is occupied by raw material that remains unused during the building process and can successively be recycled after the print job is completed.

Unfortunately, the raw material that remains unused in the build chamber stands a degradation due to different causes such as indirect exposure to laser/electron beam or contamination with binding agents, contamination with particles of fused raw material, mixing with other raw material lots and so on. To reuse such raw material a recycling process to ensure its quality and clean it from impurities is thus needed. Such a process entails obviously costs and always produces waste material.

The problem described before has up to now been tackled by maximizing the density of parts in the build chamber using nesting algorithms. These algorithms try to arrange the parts composing a build job to minimize the empty volume left in the chamber. Such a solution however can only alleviate the problem for two main reasons: Firstly, though in theory feasible, it is in practice impossible to eliminate empty volumes when combining parts of free shape. Secondly, the nesting possibilities are often limited by the prohibition of mixing parts from different print jobs, which is a typical requirement for high-end components. In the state of the art some research works can be found where the volume of the build chamber of a three-dimensional printer is somehow adapted to the size of the parts to be printed but this solution requires hardware modification of the 3D printer and is therefore not flexible.

A three-dimensional printing system is disclosed in EP 3 141 376 A1. The printing system includes a reservoir unit 21 (reservoir), a recoater unit, and an ejection head unit (solidifier). The ejection head can move three-dimensionally to deposit melted material on a build plate.

EP 2 889 125 A1 discloses a three-dimensional printer, comprising at least one print head and a stage on which chemical ink ejected from at least one print head is stacked.

An objective of the present invention is to increase a process efficiency of a three-dimensional printer.

The problem is solved by a filler material deposition device for depositing filler material in a build chamber of a three-dimensional printer according to claim 1. Furthermore, the problem is solved by a raw material deposition device for depositing raw material in a build chamber of a three-dimensional printer according to claim 6. Still further, the problem is solved by a three-dimensional printer, comprising a raw material powder deposition device and a build chamber, wherein the raw material powder deposition device is designed to deposit raw material within the build chamber to print a structural element, according to claim 9. Still further, the problem is solved by a method of printing a structural element by means of a three-dimensional printer according to claim 12. Advantageous aspects of the invention are the subject of the dependent claims.

The three-dimensional printer comprises a raw material powder deposition device which is designed to deposit raw material, usually a powder, within a build chamber of the three-dimensional printer. The deposition device can be a state-of-the-art device.

Preferably the raw material deposition device for depositing filler material in a build chamber of the three-dimensional printer comprises a plurality of injection nozzles. These nozzles are designed to deposit the raw material selectively on different parts of the build chamber. In other words, the raw material can be deposited on predetermined (spatial) positions within the build chamber to print the structural element or the structural elements three-dimensionally. To fulfill this task, the raw material deposition device comprises a transport system to transport the raw material mechanically to the injection nozzles. "Mechanically" means that the raw material (which is usually a powder) is transported / moved by means of a (solid) mechanical component, which is in direct contact with the raw material.

According to the invention, the three-dimensional printer comprises a filler material deposition device, which is designed to deposit a filler material within the build chamber on parts of the build chamber, where no raw material has been deposited, wherein the raw material and the filler material are designed differently.

The filler material deposition device for depositing filler material in a build chamber of a three-dimensional printer comprises a plurality of injection nozzles, which are designed to deposit the filler material selectively on different parts of the build chamber.

The structural element can be of any shape being printable by means of a three-dimensional printer.

The three-dimensional printer according to the invention is designed to fill, during the three-dimensional printing process, these parts of the volume of the build chamber with a special filler material, which are not occupied by the printed structural element or structural elements. The filler material is cheaper than the raw material that forms the printed parts and can be disposed of and possibly recycled after the printing process. Furthermore, the consumption of raw material during the three-dimensional printing process is minimized, consequently minimizing the need of recycling procedures. In summary, the invention reduces the amount of used raw material in (powder bed fusion) three-dimensional printers and minimizes the need of recycling processes to recover the unused powder after the printing process has been completed. Consequently, the amount of waste powder and the worktime as well as costs related to powder recycling are minimized.

The filler material can comprise sand, water and a silicate, especially clay or sodium silicate. This embodiment of the filler material is particularly cheap compared to conventional raw materials used for three-dimensional printing processes. In this way the composition of the filler material can be like that of the sands used in metal casting for the fabrication of molds. The bulk of the filler material can thus be composed of a low-cost inert material such as sand while the bonding agent can be made of a mixture of water and clay or sodium silicate. The use of a mixture of sand and a bonding agent instead of just sand or another inert powder has the advantage of creating blocks of filler material. The separation of such blocks from the leftover raw material powder at the end of the printing process is easier than the separation of two different powders and thus further optimizes the process.

Nevertheless, it also possible to use a powder as filler material which remains in the build chamber when the printed structural element is taken out of the build chamber.

In a preferred embodiment of the invention, a throughput through an orifice of each injection nozzle of the filler material deposition device and/or the raw material deposition device is controllable independently from each other. In other words, it is controllable if raw material and/or filler material is flowing out of an injection nozzle and if yes, how much material is flowing. The filler material deposition device and/or raw material deposition device are injection systems formed by an array of injection nozzles which are designed to move inside the build chamber selectively injecting filler or raw material where it is needed.

In state-of-the-art three-dimensional printers, where raw material is spread evenly distributed inside of the build chamber (by a recoater), it is not necessary (and not possible) to control a local injection rate of the nozzles. In the context of the invention, raw material and filler material must be selectively placed in different (spatial) parts of the build chamber.

Preferably, the throughput through the orifice of each injection nozzle is controllable by means of an injection needle, a shutter or a valve, especially a spherical or butterfly valve. The injection needle, shutter or valve can be controlled by means of a piezoelectric actuator what is an especially cheap and easy way of controlling.

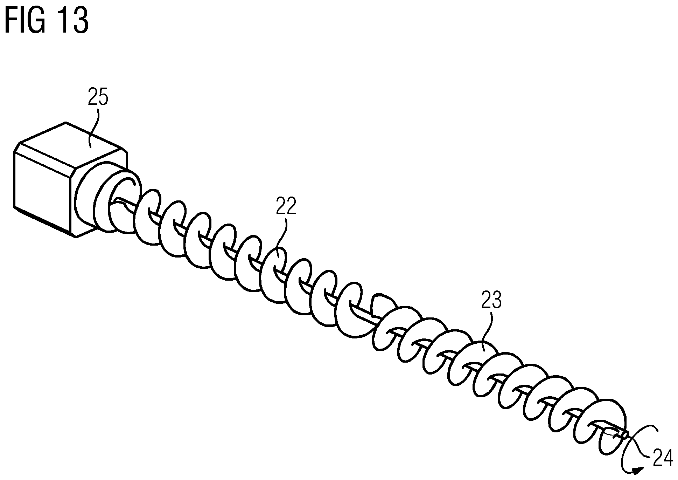

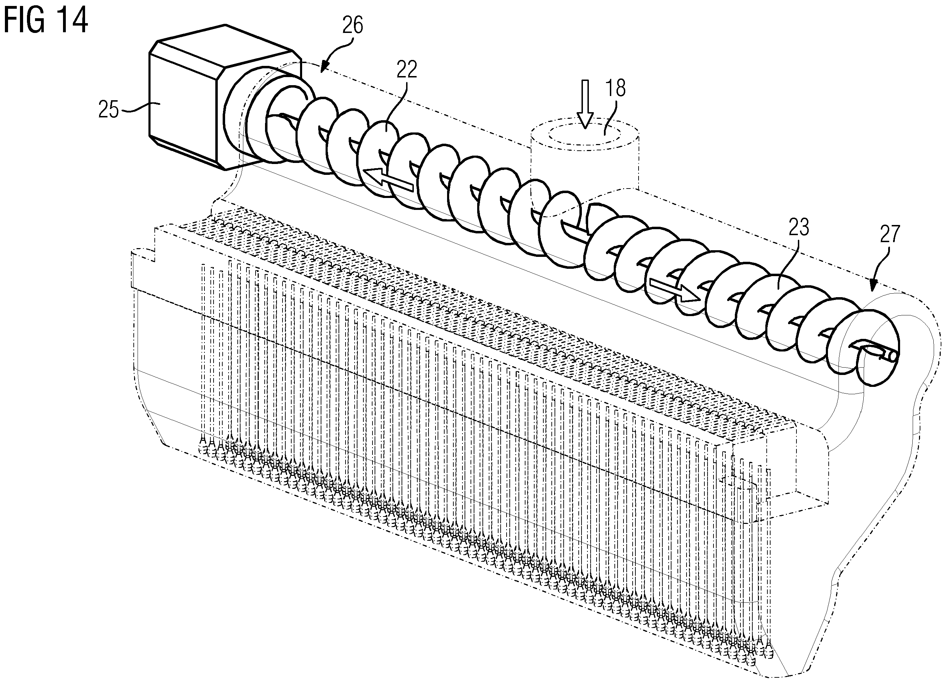

In a further preferred embodiment of the invention, the transport system of the raw material deposition device comprises rotating screws which are designed to transport the raw material to the injection nozzles. While the, usually pressurized, filler material moves, thanks to pressure relatively easy, to the nozzles, the raw material, which is usually a powder, must be transported to the orifices of the nozzle channels, from where it can reach the nozzles by gravity. For this reason, the raw material deposition device advantageously includes a transport screw that moves the powder making it reach the channels of the nozzles. Further details are described later (description of FIG 13 and 14).

Preferably, the raw material deposition device is designed to use pressurized air to transport the raw material to the injection nozzles. The use of the pressurized air further facilitates the motion of the raw material inside the raw material deposition device.

The problem described above is also solved by a method of printing a structural element by means of a three-dimensional printer, which comprises a raw material deposition device and a filler material deposition device, which are preferably designed as described above, and a build chamber. The method comprises the following steps:
a) Depositing raw material within the build chamber by means of the raw material deposition device, wherein the raw material is deposited on parts of the build chamber where the structural element is supposed to be printed;
b) Depositing a filler material within the build chamber by means of the filler material deposition device, wherein the filler material is deposited on parts of the build chamber where the structural element is not supposed to be printed, wherein the raw material and the filler material are designed differently.

Preferably, there is deposited an interface layer between the structural element printed with the raw material and the remaining parts of the build chamber filled with the filler material by means of an interface layer material deposition device. Thereby, the raw material deposition device can be the interface layer material deposition device, depositing the raw material to build the interface layer. In other words, the interface layer is built from the same raw material as the structural element. The interface layer inhibits a direct contact between the printed structural element and the filler material. By that, it is assured that the printed structural element is not contaminated by the filler material during the three-dimensional printing process.

Most preferably, the interface layer is not fused into a solid block during the three-dimensional printing process (as it is done with the structural element). Thereby, the interface layer can easily be removed from the structural element after the printing process.
In an advantageous embodiment of the invention, the deposition of the raw material and the filler material is done layer by layer, wherein each layer is divided in advance into an array of deposition fields. Thereby, a size of each field depends on the distance of the injection nozzles of the filler material deposition device and the raw material deposition device. The following algorithm defines which material is deposited on a deposition field:
i) Depositing raw material if the specific field shall at least partially represent the structural element and/or the interface layer;
ii) Otherwise, depositing filler material.

To correctly deposit the raw material powder and the filler a strategy to control the deposition devices must be formulated. Since the three-dimensional printing process builds parts by fabricating one layer (or slice) at a time, the strategy must compute for each layer where should the nozzles of the two deposition devices be opened. To define where each nozzle should be opened, a grid is superimposed over each layer. The size of that field that composes the grid is equal to the (identical) distance between two nozzles of the deposition devices. By applying this preferred method, a contamination of the structural element with the filler material can be avoided.

Features of examples of the present disclosure will become apparent by reference to the following detailed description of the drawings. For the sake of brevity, reference numerals or features having a previously described function may or may not be described in connection with other drawings in which they appear.
- FIG 1: is a perspective view of an exemplary structural element;
- FIG 2: shows a structural element being arranged on a build plane of a build chamber;
- FIG 3: shows a structural element being arranged within a build chamber;
- FIG 4: is a cross section of the arrangement according to FIG 3;
- FIG 5: shows a filler material deposition device according to the invention in a perspective view;
- FIG 6: shows the filler material deposition device according to FIG 5 in a further perspective view;
- FIG 7: shows the filler material deposition device according to FIG 5 in a cross-section perspective view;
- FIG 8: illustrates an injection needle;
- FIG 9: shows a filler material deposition device according to FIG 5 in a cross-section view;
- FIG 10: shows a filler material deposition device according to FIG 5 in a cross-section view;
- FIG 11: shows a raw material deposition device according to the invention in a perspective view;
- FIG 12: shows the raw material deposition device according to FIG 11 in a further perspective view;
- FIG 13: illustrates a transport screw;
- FIG 14: illustrates the transport screw according to FIG 13 in a raw material deposition device;
- FIG 15: shows the raw material deposition device according to FIG 11 in a cross-section perspective view;
- FIG 16: shows a printing scheme of a structural element;
- FIG 17: illustrates an aspect of the printing scheme according to FIG 16; and
- FIG 18: illustrates an aspect of the printing scheme according to FIG 16.

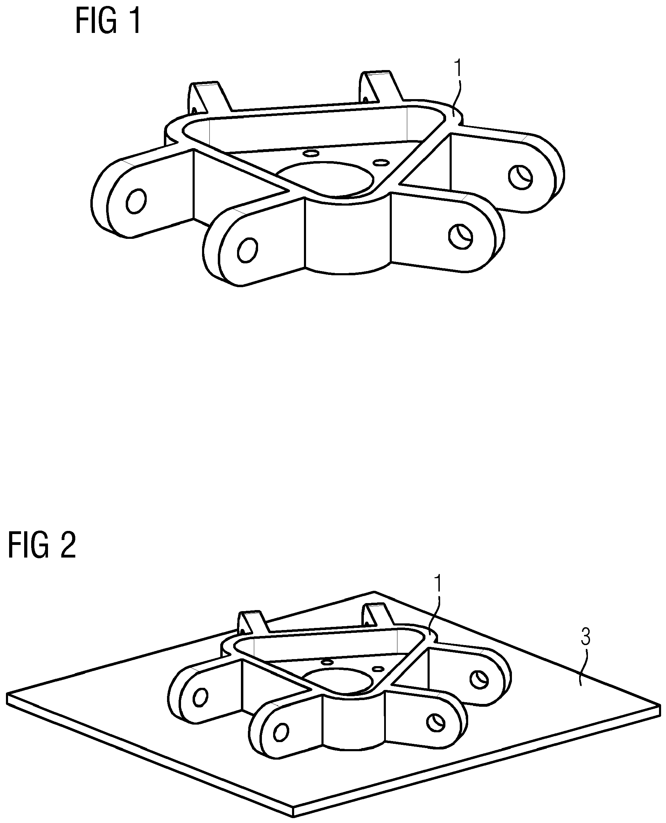

In FIG 1 there is depicted a CAD model of a structural element 1 which is supposed to be printed by means of a three-dimensional printer 2 (not shown). For example, a powder-based raw material can be used to print the structural element 1. FIG 2 shows how the structural element 1 can be positioned on a build plate 3 of the three-dimensional printer 2.

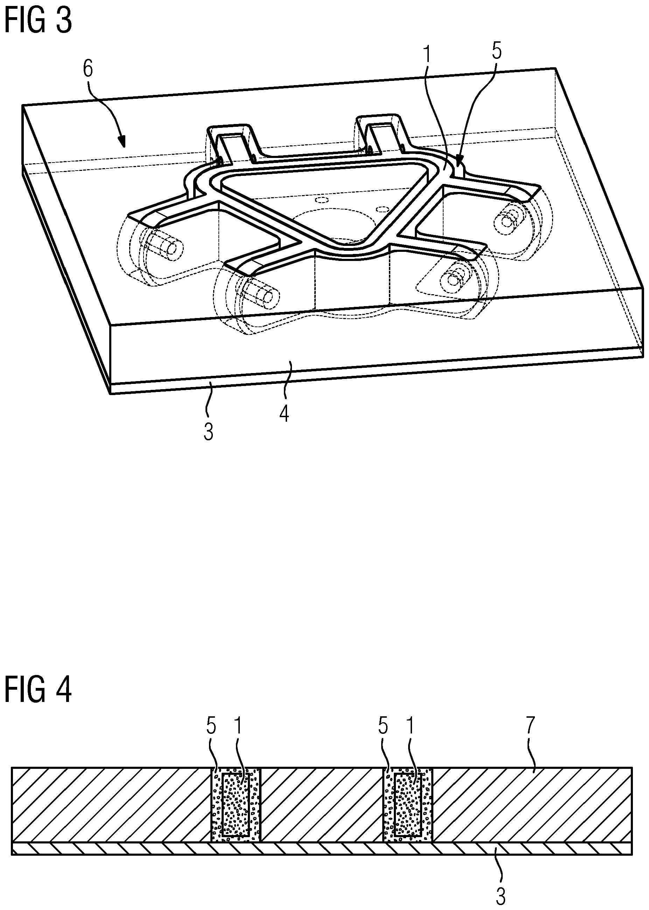

FIG 3 shows a build chamber 4 of the three-dimensional printer 2. On the bottom of the build chamber 4 there is arranged the build plate 3. The structural element 1 is positioned / printed within the build chamber 4. Except of an interface layer 5, which is in closest proximity to the structural element 1 (it surrounds the structural element 1), all parts 6 of the build chamber 4, of course with except of the structural element 1 itself, are filled with a filler material.

The composition of the filler material can be, for example, like that of the sands used in metal casting for the fabrication of molds. The bulk of the filler material can thus be composed of a low-cost inert material such as sand while the bonding agent can be made of a mixture of water and clay or sodium silicate. The use of a mixture of sand and a bonding agent instead of just sand or another inert powder has the advantage of creating blocks of filler material. The separation of such blocks from the leftover raw material powder at the end of the printing process is easier than the separation of two different powders and thus optimizes the printing process.

To further clarify how the filler material 7 is positioned inside of the build chamber 4, FIG 4 shows a cross sectional view of the model represented in FIG 3. As can be easily noticed, the structural element 1 is surrounded by the interface layer 5 which isolates the structural element 1 from the filler material 7. In other words, the interface layer 5 ensures that the printed structural element 1 is not contaminated by the filler material 7 during the three-dimensional printing process. The interface layer 5 is made of the same raw material as the structural element 1 but can also be of another material different from the raw material.

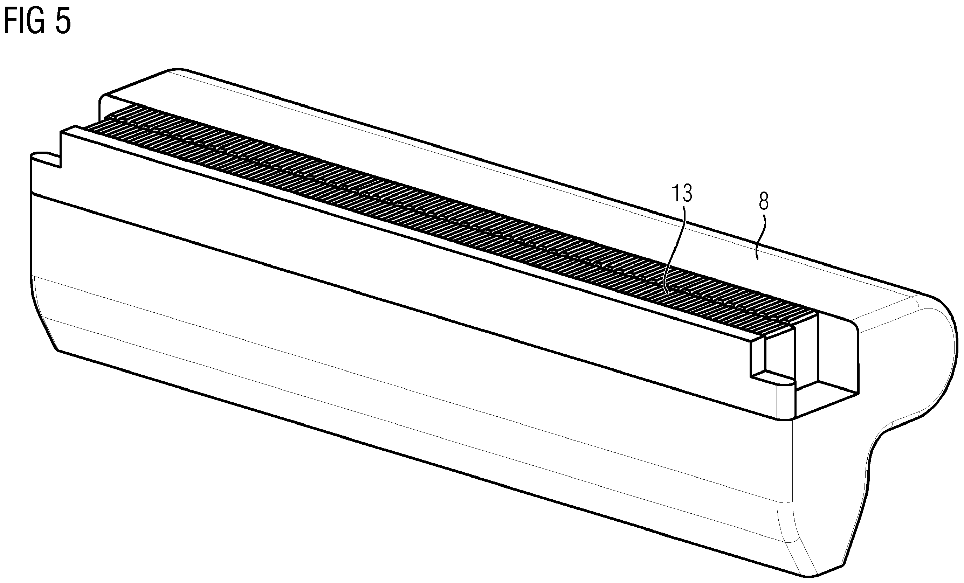

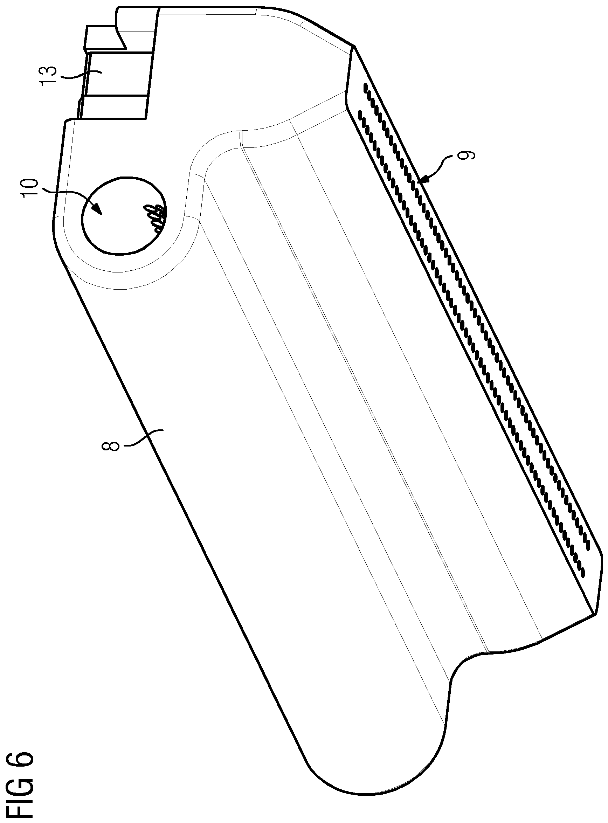

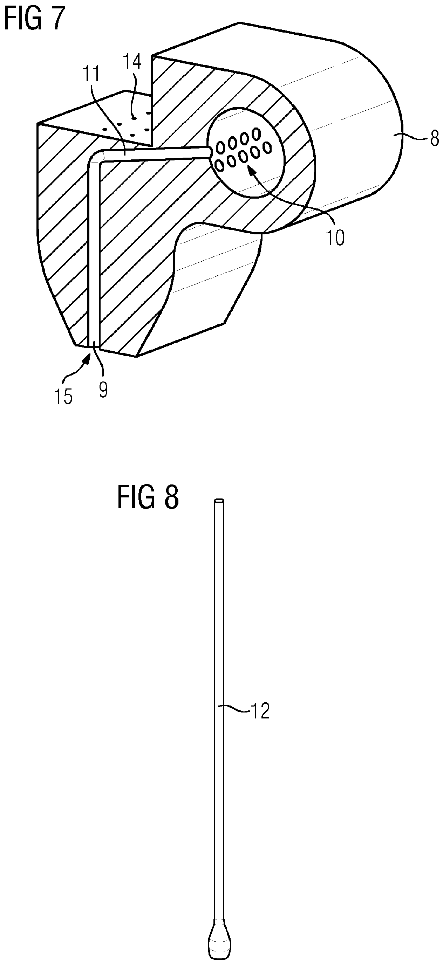

In FIG 5, FIG 6 and FIG 7 there is depicted a filler material deposition device 8 in different perspective and/or section views. The filler material deposition device 8 comprises an array of injection nozzles 9 which moves along a build plate 3 of a three-dimensional printer, being designed to selectively inject filler material 7 where it is needed. The pressurized fluid filler material 7 reaches the injection nozzles 9 passing through a filler material entry / main duct 10, which is shown in FIG 6, from which smaller ducts 11 are derived, one for each injection nozzle 9. The smaller ducts 11 are shown in FIG 7.

Each injection nozzle 9 is opened/closed by an injection needle 12 which is moved vertically by a piezoelectric actuator 13. The injection needle 12 is shown in FIG 8. A use of other types of actuators 13 is also possible. In FIG 7, the piezoelectric actuators 13 are not depicted wherefore holes 14 can be seen through which the injection needles 12 are moved to open or close an orifice 15 of each injection nozzle 9.

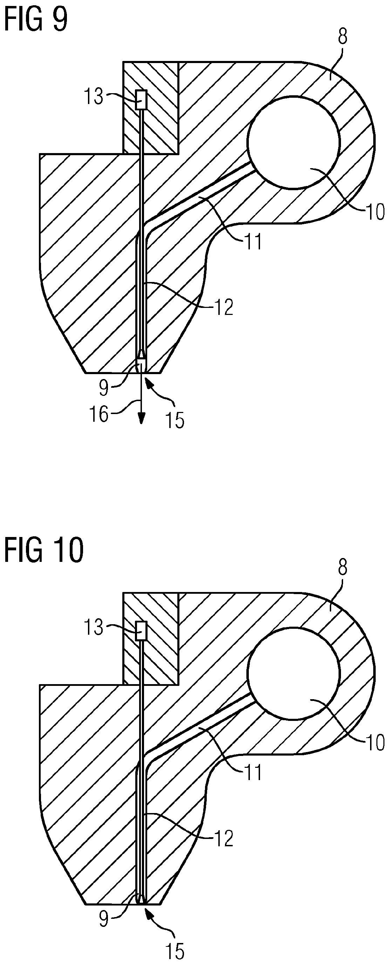

To open the injection nozzle 9 the injection needle 12 is moved upwards by its piezoelectric actuator 13, activating a filler material flow 16 through the orifice 15. To illustrate this process, FIG 9 shows an open state of the injection nozzle 9. FIG 10 illustrates accordingly a closed state.

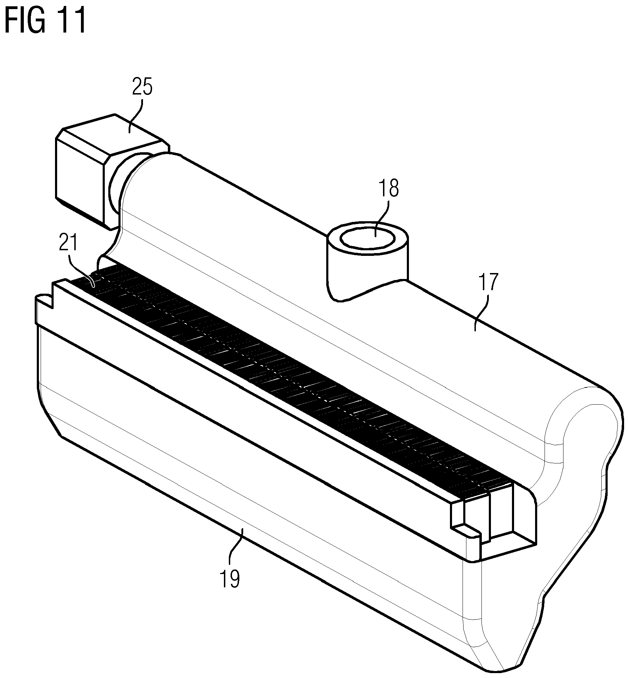

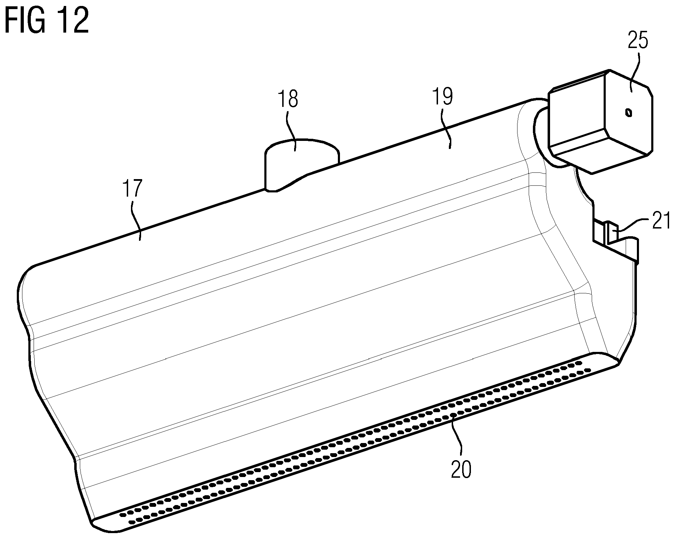

FIG 11 and FIG 12 show a raw material deposition device 17 which comprises a powder entry 18, a main body 19 and a plurality / an array of injection nozzles 20 which are controlled by corresponding nozzle actuators 21. Comparable with those of the filler material deposition device 8 the extrusion nozzles 20 are designed to deposit the raw material selectively on different parts of the build chamber 4 of the three-dimensional printer 2.

The raw material deposition device 17 further comprises a transport system 32, consisting of two rotating screws 22, 23 which are illustrated in FIG 13. The two rotating screws are arranged around a rotating shaft 24 which can be driven by a motor device 25. Threads of the two rotating screws 22, 23 are complementary (counter-rotating screws 22, 23), such that a powder flowing out of the filler entry 18 onto the screws 22, 23 is transported to two sides 26, 27 of the main body 19 of the raw material deposition device 17 (cf. FIG 14).

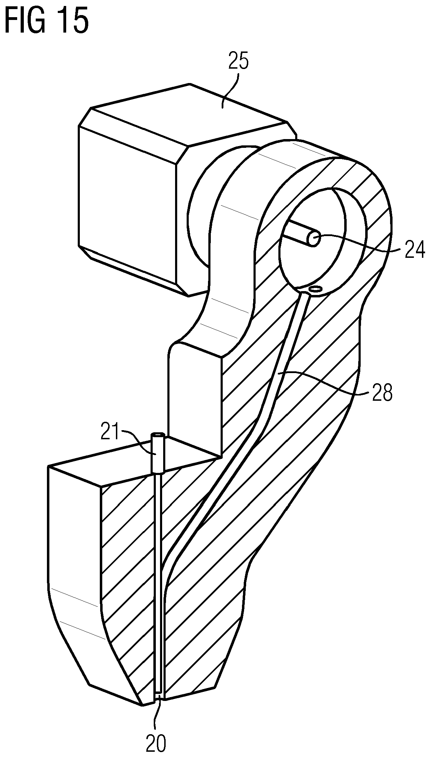

Channels 28 are moving the powder from the transport screws 22, 23 to the respective injection nozzle 20. As shown in FIG 15, a slope of the channels 28 is relatively high to facilitate a motion of the powder inside the channels 28. It is also possible to use pressurized air which is blown into these channels 28 to improve the transport of the raw material to the injection nozzles 20. The injection nozzles 20 are opened/closed by the nozzle actuators 21 which can be, for example, piezoelectric actuators (not shown in FIG 15). Of course, other types of nozzle actuators 21 are also possible.

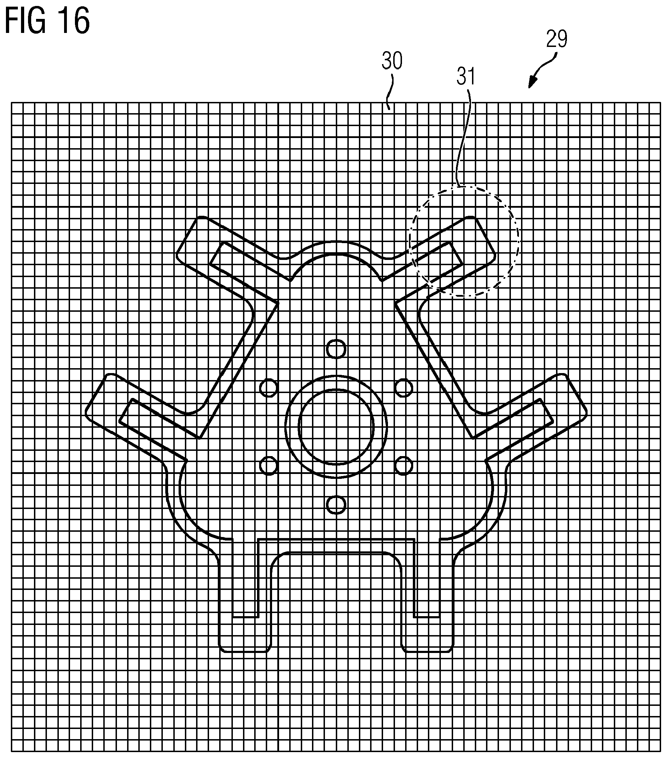

To correctly deposit the raw material powder and the filler material 7 within the build chamber 4, a strategy to control the deposition devices 8, 17 is explained in FIG 16, FIG 17 and FIG 18. The three-dimensional printing process builds the structural element 1 layer by layer, that is one layer (or slice) is fabricated at a time. The strategy computes for each layer where the injection nozzles 9, 20 of the two deposition devices 8, 17 must be opened.

At first, each layer is divided into an array 29 of deposition fields 30 (as shown in FIG 16). FIG 16 illustrates such an array 29 which is superposed on a schematic draw of a structural element 1 which shall be printed by the three-dimensional printer.

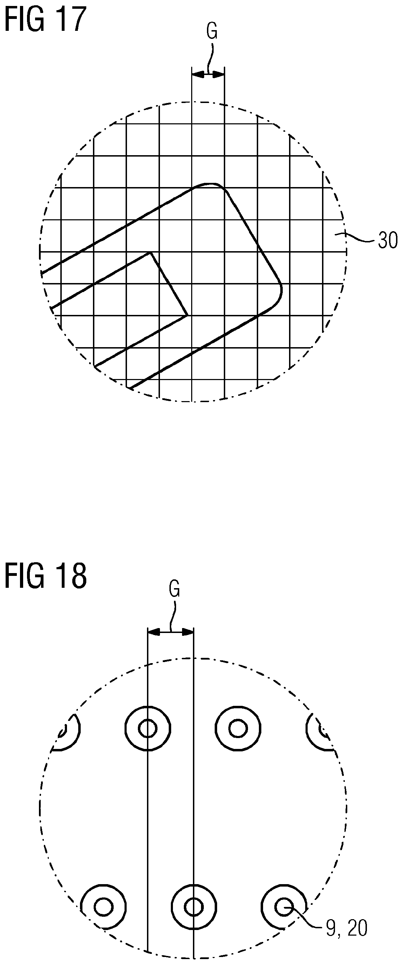

FIG 17 shows an enlargement 31 of one part of FIG 16. A length and width of each deposition field are equal. Also, the length and width are equal to a distance G between two injection nozzles 9, 20 of the deposition devices 8, 17 (cf. FIG 18). In this example, the distance G between the injection nozzles 9 of the filler material deposition device 8 are equal to the distance F between the injection nozzles 20 of the raw material deposition device 17. It is also possible that these two distances G differ from each other. In this case, a suitable length/width must be found for the deposition fields 30. Of course, it is also possible that the distance G of one or both deposition devices 8, 17 is variable.

After that, for each deposition field 30 of the array / grid 29 the following algorithm is applied to define whether raw material powder or filler material must be deposited:
a) If the specific deposition field 30 shall represent at least partially the structural element 1 and/or the interface layer 5, raw material must be deposited by the raw material deposition device 17.
b) If only filler material shall be present in the specific deposition field 30, the corresponding injection nozzle 9 of the filler material deposition device 8 must be opened.

Such a strategy advantageously avoids a contamination of the printed structural element 1 with the filler material and thus always favors the deposition of raw material powder in case the structural element 1 or the interface layer 5 are present in a specific deposition field 30.

While several examples have been described in detail, it is to be understood that the disclosed examples may be modified. Therefore, the foregoing description is to be considered non-limiting.

## Claims

1. Filler material deposition device (8) for depositing filler material (7) in a build chamber (4) of a three-dimensional printer (2), which comprises a plurality of injection nozzles (9), which are designed to deposit the filler material (7) selectively on different parts of the build chamber (4).

2. Filler material deposition device (8) according to claim 1, wherein a throughput through an orifice (15) of each injection nozzle (9) is controllable independently from each other.

3. Filler material deposition device (8) according to claim 2, wherein the throughput through the orifice (15) of each injection nozzle (9) is controllable by means of an injection needle (12), a shutter or a valve, especially a spherical or butterfly valve.

4. Filler material deposition device (8) according to claim 3, wherein the injection needle (12), the shutter or the valve is controlled by means of a piezoelectric actuator (13).

5. Filler material deposition device (8) according to one of claims 1 through 4, wherein the filler material (7) comprises sand, water and a silicate, especially clay or sodium silicate.

6. Raw material deposition device (17) for depositing raw material in a build chamber (4) of a three-dimensional printer (2), which comprises a plurality of injection nozzles (20), which are designed to deposit the raw material selectively on different parts of the build chamber (4), wherein the raw material deposition device (17) comprises a transport system (32) to transport the raw material mechanically to the injection nozzles (20).

7. Raw material deposition device (17) according to claim 6, wherein the transport system (32) comprises rotating screws (22, 23) which are designed to transport the raw material to the injection nozzles (20).

8. Raw material deposition device (17) according to claim 6 or 7, which is designed to use pressurized air to transport the raw material to the injection nozzles (20).

9. Three-dimensional printer (2), comprising a raw material deposition device (17), and a build chamber (4), wherein the raw material deposition device (17) is designed to deposit raw material within the build chamber (4) to print at least one structural element (1), **characterized in that**
the three-dimensional printer (2) comprises a filler material deposition device (8) according to one of the claims 1 through 5, which is designed to deposit a filler material (7) within the build chamber (4) on parts of the build chamber (4), where no raw material has been deposited, wherein the raw material and the filler material (7) are designed differently.

10. Three-dimensional printer (2) according to claim 9, wherein the filler material (7) comprises sand, water and a silicate, especially clay or sodium silicate.

11. Three-dimensional printer (2) according to claim 9 or 10, wherein the raw material deposition device (17) is designed according to one of claims 6 through 8.

12. Method of printing a structural element (1) by means of a three-dimensional printer (2), which comprises a raw material deposition device (17), which is preferably designed according to one of claims 6 through 8, and a build chamber (4), and a filler material deposition device (8), the method comprising:
a) Depositing raw material within the build chamber (4) by means of the raw material deposition device (17), wherein the raw material is deposited on parts of the build chamber (4) where the structural element (1) is supposed to be printed;
b) Depositing a filler material (7) within the build chamber (4) by means of a filler material deposition device (8) according to one of claims 1 through 5, wherein the filler material (7) is deposited on parts of the build chamber (4) where the structural element (1) is not supposed to be printed, wherein the raw material and the filler material (7) are designed differently.

13. Method according to claim 12, wherein there is deposited an interface layer (5) between the structural element (1) printed with the raw material and the remaining parts of the build chamber (4) filled with the filler material (7) by means of an interface layer material deposition device.

14. Method according to claim 13, wherein the raw material deposition device (17) is the interface layer material deposition device, depositing the raw material to build the interface layer (5).

15. Method according to one of claims 12 through 14, wherein the filler material (7) comprises sand, water and a silicate, especially clay or sodium silicate.

16. Method according to one of claims 12 through 15, wherein the deposition of the raw material and the filler material (7) is done layer by layer, wherein each layer is divided in advance into an array (29) of deposition fields (30), wherein a size of each deposition field (30) depends on a distance (G) between the injection nozzles (9) of the filler material deposition device (8) and on a distance (F) between the injection nozzles (20) of the raw material deposition device (17), the following algorithm defining which material is deposited on a deposition field (30):
i) Depositing raw material if the deposition field (30) shall represent at least partially the structural element (1) and/or the interface layer (5);
ii) Otherwise, depositing filler material (7).
